# EUROPÄISCHE PATENTSCHRIFT

(11) **EP 3 167 988 B1**
(45) Veröffentlichungstag und Bekanntmachung des Hinweises auf die Patenterteilung: **16.05.2018**
(21) Anmeldenummer: 16196805.2
(22) Anmeldetag: 02.11.2016
(51) Int. Cl.: B23B 51/05

(54) **LOCHSÄGE**
HOLE SAW
SCIE À GUICHET

(30) Priorität: 11.11.2015 DE 102015119431
(43) Veröffentlichungstag der Anmeldung: 17.05.2017
(73) Patentinhaber: Wolfcraft GmbH, 56746 Kempenich (DE)
(72) Erfinder: Ebert, Winfried, 56745 Weibern (DE); Noniewicz, Zbigniew, 56746 Kempenich (DE); Moog, Christopher, 56422 Wirges (DE)
(74) Vertreter: Grundmann, Dirk

(56) Entgegenhaltungen:
- FR-A1- 2 704 790
- US-A- 2 803 153
- US-A- 3 771 895

## Beschreibung

### Gebiet der Technik

Die Erfindung betrifft eine Lochsäge gemäß dem Gattungsbegriff des Anspruches 1.

### Stand der Technik

Eine gattungsgemäße Lochsäge wird von der US 3,771,895 beschrieben. In Radialschlitzen eines scheibenförmigen Haltegliedes sind Steuerfortsätze von Sägeelementen radial verlagerbar. Ein Steuerfortsatz des Sägeelementes greift in einen zu beiden Seiten einer Einstellscheibe hin offenen Spiralschlitz.

Die US 2,803,153 und die FR 2 704 790 beschreiben Lochsägen, bei denen die Einstellscheibe nur einseitig offene Spiralschlitze aufweist.

Die WO 2014/146319 A1 beschreibt eine Lochsäge mit einem haubenförmigen Einstellglied, das eine Bodenwand und eine Umfangswand aufweist. Auf der Bodenwandung des Haubenteiles sitzt eine Einstellscheibe mit Spiralschlitzen, in die Steuerfortsätze von Befestigungselementen eingreifen, die in Radialschlitzen einer Haltescheibe einliegen. Jedes Befestigungselement trägt ein Sägeelement. Durch eine Relativverdrehung des Haubenteiles gegenüber der Haltescheibe kann die Lochweite der Lochsäge eingestellt werden.

Lochsägen der oben bezeichneten Art werden insbesondere beim Trockenausbau verwendet, um in Gipskartonplatten große, kreisförmige Löcher für Steckdosen oder Schalter zu sägen. Der feine Gipsstaub kann dabei die spiralförmigen Einstellschlitze verstopfen.

### Zusammenfassung der Erfindung

Der Erfindung liegt die Aufgabe zugrunde, die gattungsgemäße Lochsäge gebrauchsvorteilhaft weiterzubilden.

Gelöst wird die Aufgabe durch die im Anspruch 1 angegebene Erfindung. Die Unteransprüche stellen vorteilhafte Weiterbildungen dar.

Zunächst und im Wesentlichen wird ein Haubenteil vorgeschlagen, das eine Wand aufweist, die den Freiraum begrenzt. Die Breitseitenfläche der Einstellscheibe und die Wand des Haubenteils begrenzen den Freiraum. In diesen Freiraum kann der beim Bearbeiten einer Gipskartonplatte entstehende Gipsstaub eintreten. Dies führt zu einer verminderten Neigung der Spiralschlitze zu verstopfen. Der Freiraum wird bevorzugt von einer Rückwand begrenzt. Die Rückwand kann eine Wand eines Haubenteiles des Einstellgliedes sein. Der Freiraum wird dann von der Breitseitenfläche der Wand des Haubenteiles und der Breitseitenfläche der Einstellscheibe begrenzt. Der Freiraum erstreckt sich bevorzugt bis zum äußersten Rand der Einstellscheibe und besitzt eine Höhe, die in etwa der Materialstärke der Einstellscheibe entspricht. Das Haubenteil besitzt bevorzugt eine topfförmige Öffnung, die von einer Umfangswand umgeben ist. In dieser Umfangswand können Fenster angeordnet sein. Diese Fenster bilden nach radial außen weisende Öffnungen, durch die in den Freiraum eingetretener Gipsstaub heraustreten kann. Im Freiraum können Distanzelemente vorgesehen sein. Die Distanzelemente können von Stegen ausgebildet sein, die auf Spirallinien angeordnet sind. Gelangt der Gipsstaub durch die Spiralschlitze hindurch in den Freiraum so bewirken die Distanzelemente, dass der Gipsstaub drehmitgenommen wird. Die dabei auf den Gipsstaub wirkende Fliehkraft führt zu einem Transport des Gipsstaubs hin zu den Fenstern, durch welche der Gipsstaub den Freiraum verlassen kann. Das Einstellglied, welches von dem Haubenteil und der drehfest mit dem Haubenteil verbundenen Einstellscheibe ausgebildet ist, ist bevorzugt gegenüber dem, Antriebsschaft verdrehbar. Die Spiralschlitze verdrehen sich dabei gegenüber den Radialführungen, bei denen es sich ebenfalls um Schlitze handelt, so dass die in den Radialführungen angeordneten Befestigungselemente, die mit einem Steuerfortsatz jeweils in einen Spiralschlitz eingreifen, in Radialrichtung verstellt werden. Während die Einstellscheibe und das Haubenteil aus Kunststoff gefertigt sein können, ist das Halteglied und sind die Befestigungselemente aus Metall gefertigt. Die Radialführung wird bevorzugt von einem Radialschlitz gebildet, der einen Querschnitt mit mehreren Schlitzabschnitten besitzt, die sich hinsichtlich ihrer Schlitzweite unterscheiden und in Axialrichtung, bezogen auf die Drehachse, versetzt zueinander angeordnet sind. In einem ersten Schlitzabschnitt mit einer großen Schlitzweite befindet sich ein Vierkantabschnitt des Befestigungselementes. Der Vierkantabschnitt hält das Befestigungselement drehgesichert in der Radialführung. Von dem Vierkantabschnitt gehen beidseitig Rundabschnitte aus, von denen einer den Steuerfortsatz ausbildet, der in den Spiralschlitz eingreift. Die axiale Länge des Steuerfortsatzes ist größer, als die axiale Schlitzhöhe des Spiralschlitzes, so dass freie Ende des Steuerfortsatzes bis in den Freiraum hineinragt. Ein dem Steuerfortsatz gegenüberliegender Rundabschnitt greift in einen zweiten Schlitzabschnitt ein, der eine geringere Schlitzweite aufweist. Diesem zweiten Schlitzabschnitt schließt sich ein dritter Schlitzabschnitt mit einer größeren Schlitzweite als der zweite Schlitzabschnitt an. In dem dritten Schlitzabschnitt liegt ein Befestigungswinkel des Sägeelementes ein. Die Breite des Befestigungswinkels entspricht dabei der Schlitzweite des dritten Schlitzabschnittes, so dass der Befestigungswinkel undrehbar im dritten Schlitzabschnitt einliegt. Es ist eine Befestigungsschraube vorgesehen, deren Kopf, der sich auf dem Befestigungswinkel abstützt und deren Schaft in ein Innengewinde des Befestigungselementes eingeschraubt ist. Das Innengewinde erstreckt sich bevorzugt über die gesamte axiale Länge des Befestigungselementes, also durch die beiden Rundabschnitte des Befestigungselementes hindurch. Der Vierkantabschnitt und der Befestigungswinkel bilden aufeinander zu weisende Flächenabschnitte aus. Diese Flächenabschnitte bilden Klemmflächen, die auf dem Boden des ersten und des dritten Schlitzabschnittes aufliegen. Mit der Schraube kann eine Klemmkraft erzeugt werden, die die Befestigungselemente und die Sägeelemente fesseln.

### Kurze Beschreibung der Zeichnungen

Ein Ausführungsbeispiel der Erfindung wird nachfolgend anhand beigefügter Zeichnungen erläutert. Es zeigen:

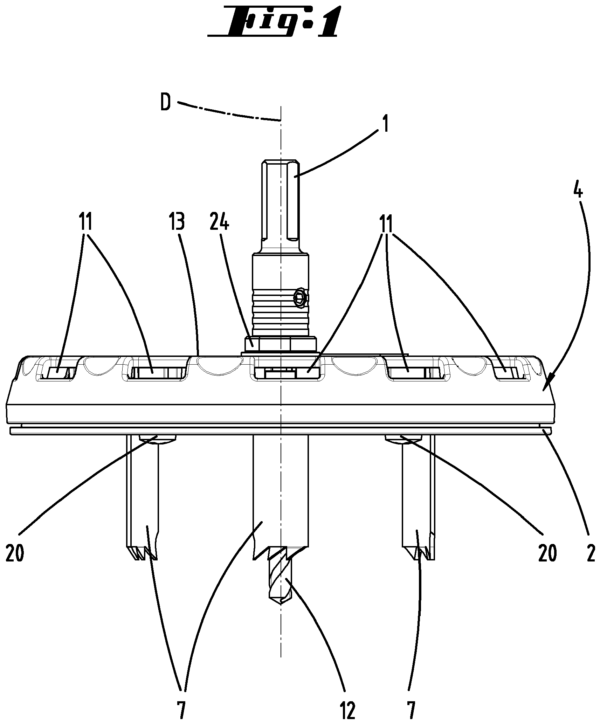

- Fig. 1: eine Seitenansicht auf eine Lochsäge,

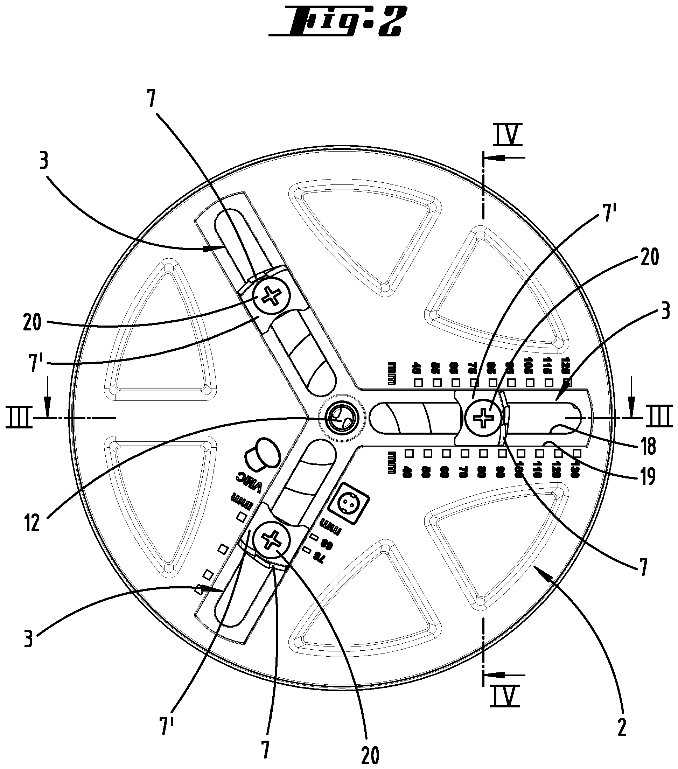

- Fig. 2: eine Unteransicht der Lochsäge auf das Halteglied 2,

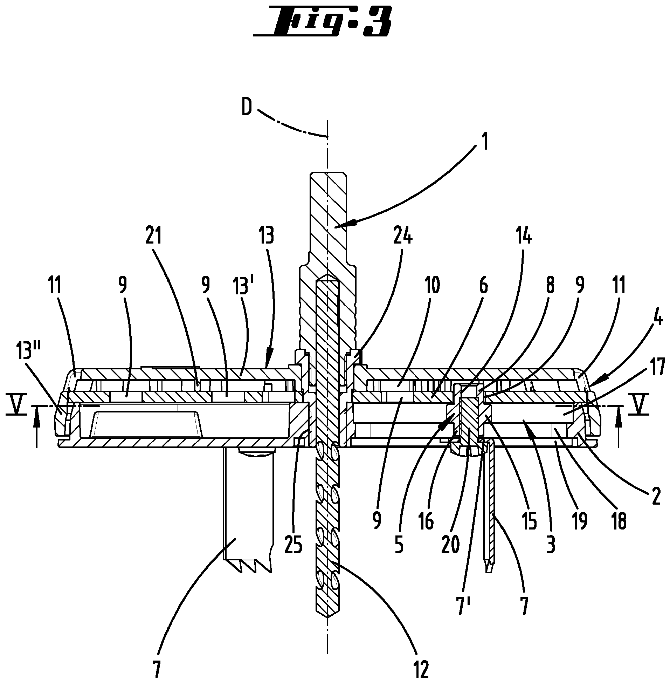

- Fig. 3: den Schnitt gemäß der Linie III-III in Figur 2,

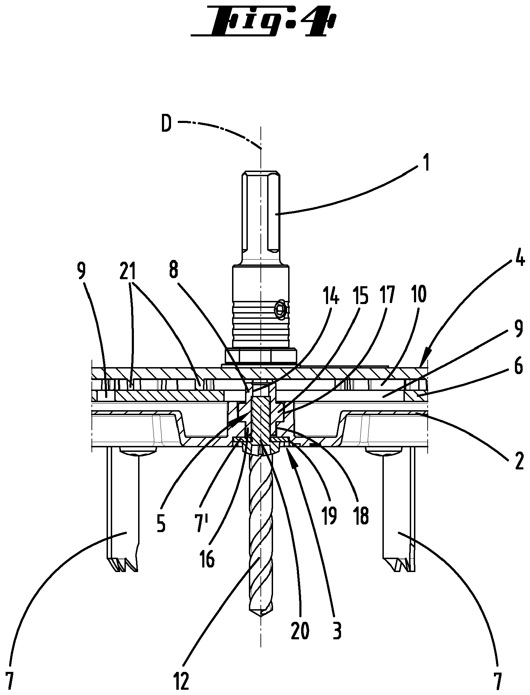

- Fig. 4: den Schnitt gemäß der Linie IV-IV in Figur 2,

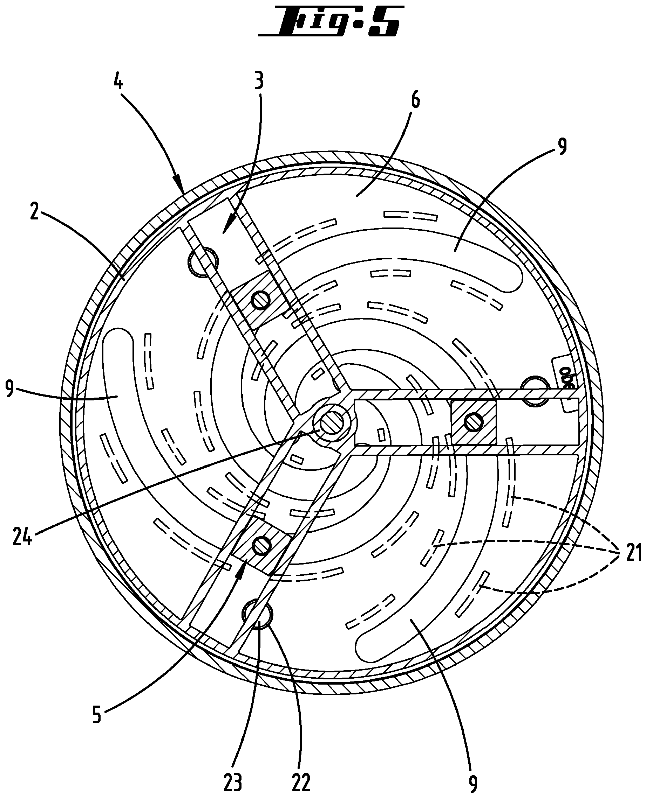

- Fig. 5: den Schnitt gemäß der Linie V-V in Figur 3,

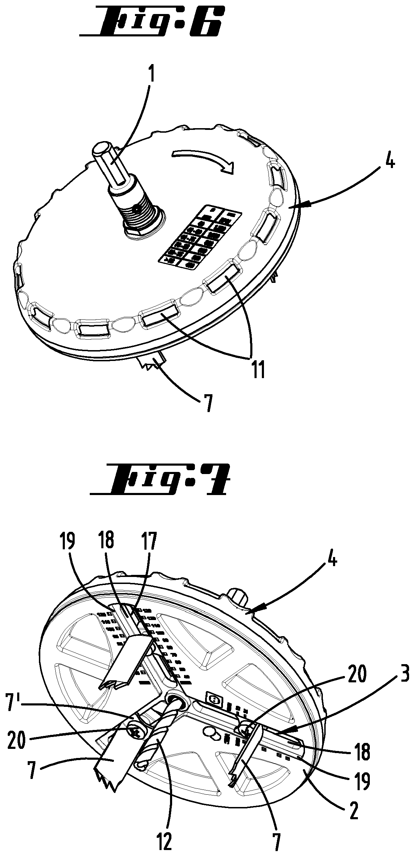

- Fig. 6: eine erste perspektivische Darstellung,
- Fig. 7: eine zweite perspektivische Darstellung und

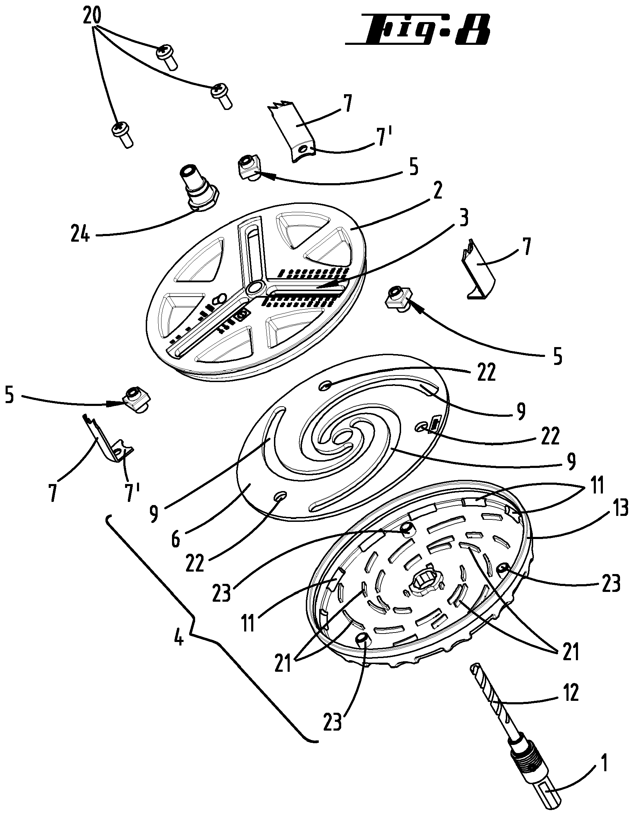

- Fig. 8: eine Explosionsdarstellung der Elemente der Lochsäge.

### Beschreibung der Ausführungsformen

Ein Antriebsabschnitt 1 definiert eine Drehachse D, um die Lochsäge drehantreibbar ist. Hierzu wird der Antriebsschaft 1 in das Futter einer Bohrmaschine eingespannt. Der Antriebsschaft 1 lagert einen Pilotbohrer 12. Hierzu besitzt der Antriebsschaft 1 eine mit der Drehachse D koaxiale Bohrung zur Aufnahme des Schaftes des Pilotbohrers 12. Ein Gewindeabschnitt eines ersten Teiles des Antriebsschaftes 1 ist in einen Gewindeabschnitt eines Fesselungselementes 24 des Antriebsschaftes 1 eingeschraubt. Das Fesselungselement 24 besitzt ein Außengewinde, das in eine Gewindebohrung 25 eines Haltegliedes 2 eingeschraubt ist. Das Fesselungselement 24 übergreift mit einem Bund eine Durchtrittsöffnung eines Einstellgliedes 4, so dass das Einstellglied 4 axial an das Halteglied 2 gefesselt ist.

Das Halteglied 2 besteht aus einer aus Metall gefertigten Kreisscheibe, die drei Radialschlitze jeweils mit einem Querschnitt, der drei Schlitzabschnitte 17,18,19 aufweist. Die Radialschlitze bilden jeweils eine Radialführung 3 aus.

Jede der drei Radialführungen 3 nimmt ein aus Metall gefertigtes Befestigungselement 5 auf. Das Befestigungselement 5 besitzt einen Vierkantabschnitt 15, der undrehbar, aber radial verschieblich in einem ersten Schlitzabschnitt 17 der Radialführung 3 einliegt. Dabei liegen sich gegenüberliegende Mehrkantkanten des Vierkantabschnittes in berührender Anlage an der Wandung des ersten Schlitzabschnittes 17. Ein Gleitflächenabschnitt des Vierkantabschnittes 15 stützt sich auf dem Boden des Schlitzabschnittes 17 ab.

Ein Rundabschnitt 16 des Befestigungselementes 15 durchragt einen zweiten Schlitzabschnitt 18, dessen Schlitzweite geringer ist, als die Schlitzweite des ersten Schlitzabschnittes 17. Während der erste Schlitzabschnitt 17 zu einer ersten Breitseitenfläche des Haltegliedes 2 offen ist, ist ein dritter Schlitzabschnitt 19 zu einer zweiten Breitseitenfläche des Haltegliedes 2 offen. In dem dritten Schlitzabschnitt 19 lagert ein Befestigungswinkel 7' eines Sägezähne aufweisenden Sägeelementes 7. Die Breite des Befestigungswinkels 7' entspricht dabei der Breite des dritten Schlitzabschnittes 19, die etwa der Weite des ersten Schlitzabschnittes 17 entspricht. Ein Flächenabschnitt des Befestigungswinkels 7' stützt sich auf dem Boden des dritten Schlitzabschnittes 19 ab. Der Befestigungswinkel 7' besitzt Randkanten, die an den beiden parallel zueinander verlaufenden Wandungen des Schlitzabschnittes 19 anliegen, so dass der Befestigungswinkel 7' undrehbar in der Radialführung 3 befestigt ist.

Der Befestigungswinkel 7' besitzt eine Bohrung, durch die eine Befestigungsschraube 20 hindurchgreift, die in einem Innengewinde 14 des Befestigungselementes 5 eingeschraubt ist. Die Schraube 20 entfaltet eine Klemmwirkung, mit der das Befestigungselement 5 und das daran befestigte Sägeelement 7 am Halteglied 2 fixiert werden können. Die Klemmkraft wird vom Befestigungswinkel 7' in den Boden des Schlitzabschnittes 19 übertragen. Während der Befestigungswinkel 7' in der Flächenerstreckungsebene des Haltegliedes 2 liegt, ragt ein Arbeitsabschnitt des Sägeelementes 7, der an seinem freien Ende eine Sägeverzahnung aufweist, in Richtung der Flächennormalen von der Breitseitenfläche des Haltegliedes 2 ab.

Das Einstellglied 4 besteht aus Kunststoff und weist ein Haubenteil 13 mit einer sich parallel zum Halteglied 2 erstreckenden Wand 13' und einer zumindest einen Bereich des Umfangs des Haltegliedes 2 umgebenden Umfangswand 13" auf.

Von der Wand 13' des Haubenteiles 13 ragen in die Höhlung des Haubenteiles 13 Distanzrippen 21 ab. Auf den Distanzrippen 21 ruht eine Einstellscheibe 6, die drehfest an das Haubenteil 13 gefesselt ist. Hierzu greifen von der Wand 13' abragende Justiervorsprünge 23 in Justierbohrungen 22 der Einstellscheibe 6.

Die Einstellscheibe 6 besitzt insgesamt drei auf Spiralkurven angeordnete Spiralschlitze 9, die zu jeder der beiden voneinander wegweisenden Breitseitenflächen der Einstellscheibe 6 offen sind. Die Distanzrippen 21 sind voneinander beabstandet und derart auf Spirallinien angeordnet, dass sie entlang eines Randes eines jeden Spiralschlitzes 9 angeordnet sind. Sie erstrecken sich somit im Spiralzwischenraum zwischen zwei benachbarten Spiralschlitzen 9 und halten die Einstellscheibe 6 in einem definierten Abstand zur Wand 13', welcher in etwa der Materialstärke der Einstellscheibe 6 entspricht.

In der Umfangswand 13" sind mehrere in gleichmäßiger Winkelverteilung angeordnete Fenster 11 vorgesehen. Die Fenster 11 bilden radial äußere Öffnungen des Freiraums 10.

Ein vom Befestigungselement 5 abragender Steuerfortsatz 8 greift in den Spiralschlitz 9 ein. Die axiale Länge des Steuerfortsatzes 8 ist größer, als die Materialstärke der Einstellscheibe 6, so dass sich das freie Ende des Steuerfortsatzes 8 bis in den Freiraum 10 hinein erstreckt.

Die Funktionsweise der Lochsäge ist die Folgende:
Mit gelösten Schrauben 20 lassen sich Befestigungselemente 5 innerhalb der Radialführungen 3 verschieben. Hierzu muss das Einstellglied 4 gegenüber dem Halteglied 2 relativ verdreht werden. Da der Antriebsabschnitt 1 drehfest mit dem Halteglied 2 verbunden ist, kann das Einstellglied 4 gegenüber dem Antriebsabschnitt 1 verdreht werden. Dabei gleiten die Steuerfortsätze 8 in den ihnen zugeordneten Spiralschlitzen 9 und die Vierkantabschnitte 15 in den Radialführungen 3. Durch die Relativverdrehung des Einstellgliedes 4 gegenüber dem Halteglied 2 lassen sich somit die Radialabstände aller Sägeelemente 7 synchron verstellen. Ist der gewünschte Lochdurchmesser eingestellt, so werden die Schrauben 20 festgezogen, so dass sich die Befestigungselemente 5 unter Mitwirkung der Befestigungswinkel 7' in den Radialführungen 3 verklemmen.

Beim Lochsägen wird zunächst mit dem Pilotbohrer 12, dessen Spitze in Radialrichtung über die Sägezähne der Sägeelemente 7 hinausragt, eine Pilotbohrung gebohrt. Sodann greifen die Sägezähne des Sägeelementes 7 in das Werkstück. Beim Bohren von Gipskartonwänden entsteht feiner Gipsstaub, der durch die Schlitzabschnitte 17 bis 19 der Radialführungen 3 in die Spiralschlitze 9 hineintreten kann. Da die Spiralschlitze 9 zu beiden Seiten offen sind, kann der Gipsstaub in den Freiraum 10 eintreten. Die Distanzrippen 21 nehmen den Gipsstaub bei ihrer Drehrichtung mit, so dass auf den Gipsstaub eine Zentrifugalkraft wirkt, die ihn nach radial außen treibt, wo er den Freiraum 10 durch die Fenster 11 verlassen kann. Mit der Erfindung wird somit dem Problem einer Verstopfung der Spiralschlitze 9 entgegengewirkt.

**Liste der Bezugszeichen**

| | | | |
|---|---|---|---|
| 1 | Antriebs schaft | 25 | Gewindebohrung |
| 2 | Halteglied | | |
| 3 | Radialführung | | |
| 4 | Einstellglied | | |
| 5 | Befestigungselement | | |
| 6 | Einstellscheibe | | |
| 7 | Sägeelement | | |
| 7' | Befestigungswinkel | | |
| 8 | Steuerfortsatz | D | Drehachse |
| 9 | Spiralschlitz | | |
| 10 | Freiraum | | |
| 11 | Fenster | | |
| 12 | Pilotbohrer | | |
| 13 | Haubenteil | | |
| 13' | Wand | | |
| 13" | Umfangswand | | |
| 14 | Innengewinde | | |
| 15 | Vierkantabschnitt | | |
| 16 | Rundabschnitt | | |
| 17 | erster Schlitzabschnitt | | |
| 18 | zweiter Schlitzabschnitt | | |
| 19 | dritter Schlitzabschnitt | | |
| 20 | Schraube | | |
| 21 | Distanzrippe | | |
| 22 | Justierbohrung | | |
| 23 | Justiervorsprung | | |
| 24 | Fesselungselement | | |

## Patentansprüche

1. Lochsäge mit einem um eine Drehachse (D) drehantreibbaren Antriebsschaft (1), einem Halteglied (2), das Radialführungen (3) aufweist und einem gegenüber dem Halteglied (2) zur Verstellung des Lochdurchmessers relativ verdrehbaren Einstellglied (4), wobei in den Radialführungen (3) jeweils ein Befestigungselement (5) geführt und befestigbar ist, das mit einem Sägeelement (7) und einem Steuerfortsatz (8) verbunden ist, der in einen zum Halteglied (2) offenen Spiralschlitz (9) einer Einstellscheibe (6) des Einstellgliedes (4) eingreift, wobei der Spiralschlitz (9) auch zu einem dem Halteglied (2) gegenüberliegenden Freiraum (10) der Einstellscheibe (6) offen ist, **dadurch gekennzeichnet, dass** das Einstellglied (4) ein Haubenteil (13) mit einer sich parallel zur Einstellscheibe (6) erstreckenden, den Freiraum (10) begrenzenden Wand (13') aufweist.

2. Lochsäge nach Anspruch 1, **gekennzeichnet durch** eine zumindest ein Fenster (11) aufweisende Umfangsbegrenzung des Freiraums (10).

3. Lochsäge nach einem der vorherigen Ansprüche, **dadurch gekennzeichnet, dass** die Umfangsbegrenzung des Freiraums (10) von einer Umfangswandung (13") des Haubenteiles (13) ausgebildet ist.

4. Lochsäge nach einem der vorherigen Ansprüche, **dadurch gekennzeichnet, dass** der Wand (13') des Haubenteiles (13) Distanzelemente (21) entspringen, an denen sich eine Breitseitenfläche der Einstellscheibe (6) abstützt.

5. Lochsäge nach einem der vorherigen Ansprüche, **dadurch gekennzeichnet, dass** die Radialführung (3) von einem Radialschlitz ausgebildet wird, dessen Querschnitt Schlitzabschnitte (17,18,19) mit unterschiedlichen Schlitzweiten besitzt, wobei in einem ersten Schlitzabschnitt (17) ein Vierkantabschnitt (15) des Befestigungselementes (5) undrehbar einliegt, sich an den ersten Schlitzabschnitt (17) ein zweiter Schlitzabschnitt (18) mit einer geringeren Schlitzweite anschließt und sich dem zweiten Schlitzabschnitt (18) wiederum ein dritter Schlitzabschnitt (19) mit einer größeren Schlitzweite anschließt, in dem ein Befestigungswinkel (7') des Sägeelementes undrehbar einliegt, welches mittels einer Befestigungsschraube (20), die in ein Innengewinde (14) des Befestigungselementes (5) eingeschraubt ist, in einem Klemmsitz gegenüber dem Vierkantabschnitt (15) fixiert ist.

6. Lochsäge nach Anspruch 5, **dadurch gekennzeichnet, dass** sich an dem Vierkantabschnitt (15) des Befestigungselementes (5) beidseitig ein Rundabschnitt (16) anschließt, durch den sich das Innengewinde (14) erstreckt, wobei ein Rundabschnitt den in den Spiralschlitz (9) eingreifenden Steuerfortsatz (8) ausbildet.

7. Lochsäge nach einem der vorherigen Ansprüche, **dadurch gekennzeichnet, dass** der Steuerfortsatz (8) durch den Spiralschlitz (9) bis in den Freiraum (10) hineinragt.

## Claims

1. Hole saw comprising a drive shaft (1) that can be rotatably driven about an axis of rotation (D), a retaining member (2) that comprises radial guides (3), and an adjusting member (4) that can be relatively rotated with respect to the retaining member (2) in order to adjust the diameter of the hole, a fastening element (5) being guided into each of the radial guides (3) and being able to be fastened therein, which fastening element is connected to a saw element (7) and a control extension (8) that engages in a spiral slot (9), which is open towards the retaining member (2), of an adjusting disc (6) of the adjusting member (4), the spiral slot (9) also being open towards a clearance (10) of the adjusting disc (6) that is located opposite the retaining member (2), **characterised in that** the adjusting member (4) comprises a hood part (13) having a wall (13') that extends in parallel with the adjusting disc (6) and defines the clearance (10).

2. Hole saw according to claim 1, **characterised by** a peripheral boundary of the clearance (10) that comprises at least one window (11).

3. Hole saw according to either of the preceding claims, **characterised in that** the peripheral boundary of the clearance (10) is formed by a peripheral wall (13") of the hood part (13).

4. Hole saw according to any of the preceding claims, **characterised in that** spacer elements (21) project from the wall (13') of the hood part (13), on which elements a short end face of the adjusting disc (6) is supported.

5. Hole saw according to any of the preceding claims, **characterised in that** the radial guide (3) is formed by a radial slot, the cross section of which comprises slot portions (17, 18, 19) having different slot widths, a square portion (15) of the fastening element (5) resting non-rotatably in a first slot portion (17), a second slot portion (18) having a smaller slot width adjoining the first slot portion (17), and a third slot portion (19) having a larger slot width in turn adjoining the second slot portion (18), in which third slot portion an angle bracket (7') of the saw element rests non-rotatably, which angle bracket is fixed in a press fit with respect to the square portion (15) by means of a fastening screw (20) that is screwed into an internal thread (14) of the fastening element (5).

6. Hole saw according to claim 5, **characterised in that** a circular portion (16) adjoins the square portion (15) of the fastening element (5) on both sides thereof, through which circular portion the inner thread (14) extends, a circular portion forming the control extension (8) that engages in the spiral slot (9).

7. Hole saw according to any of the preceding claims, **characterised in that** the control extension (8) projects through the spiral slot (9) as far as the clearance (10).

## Revendications

1. Scie-cloche ayant un arbre d'entraînement (1) pouvant être entraîné en rotation autour d'un axe de rotation (D), un élément de maintien (2) qui présente des guides radiaux (3) et un élément de réglage (4) pouvant tourner de manière relative par rapport à l'élément de maintien (2) pour régler le diamètre de trou, dans laquelle dans chacun des guides radiaux (3) est guidé et peut être fixé un élément de fixation (5) qui est relié à un élément de sciage (7) et à une saillie de commande (8) qui engage une fente en spirale (9) d'un disque de réglage (6) de l'élément de réglage (4) laquelle est ouverte vers l'élément de maintien (2), dans laquelle la fente en spirale (9) est également ouverte vers un espace libre (10) du disque de réglage (6) opposé à l'élément de maintien (2), **caractérisée en ce que** l'élément de réglage (4) présente une partie de capot (13) ayant une paroi (13') délimitant l'espace libre (10) et s'étendant parallèlement au disque de réglage (6).

2. Scie-cloche selon la revendication 1, **caractérisée par** au moins une délimitation périphérique de l'espace libre (10) présentant au moins une fenêtre (11).

3. Scie-cloche selon l'une des revendications précédentes, **caractérisée en ce que** la délimitation périphérique de l'espace libre (10) est formée par une paroi périphérique (13") de la partie de capot (13).

4. Scie-cloche selon l'une des revendications précédentes, **caractérisée en ce que** des éléments d'écartement (21) s'étendent à partir de la paroi (13') de la partie de capot (13) sur lesquels s'appuie une surface principale du disque de réglage (6).

5. Scie-cloche selon l'une des revendications précédentes, **caractérisée en ce que** le guide radial (3) est formé par une fente radiale dont la section transversale comprend des tronçons de fente (17, 18, 19) ayant des largeurs de fente différentes, dans laquelle un tronçon carré (15) de l'élément de fixation (5) est placé dans un premier tronçon de fente (17) en étant immobilisé en rotation, un deuxième tronçon de fente (18) ayant une largeur de fente plus petite se raccorde au premier tronçon de fente (17) et un troisième tronçon de fente (19) ayant une largeur de fente plus grande se raccorde pour sa part au deuxième tronçon de fente (18) dans lequel troisième tronçon de fente (19) est montée, en étant immobilisée en rotation, une équerre de fixation (7') de l'élément de sciage qui est fixée avec serrage vis-à-vis du tronçon carré (15) au moyen d'une vis de fixation (20) qui est vissée dans un taraudage (14) de l'élément de fixation (5).

6. Scie-cloche selon la revendication 5, **caractérisée en ce qu'**un tronçon rond (16) se raccorde au tronçon carré (15) de l'élément de fixation (5) de part et d'autre, à travers lequel s'étend le taraudage (14), dans laquelle un tronçon rond forme la saillie de commande (8) qui engage la fente en spirale (9).

7. Scie-cloche selon l'une des revendications précédentes, **caractérisée en ce que** la saillie de commande (8) fait saillie à travers la fente en spirale (9) jusque dans l'espace libre (10).
